(19)

**Europäisches Patentamt**
**European Patent Office**
**Office européen des brevets**

(11) **EP 1 745 100 B1**

(12) **EUROPEAN PATENT SPECIFICATION**

(45) Date of publication and mention
of the grant of the patent:
**02.12.2009 Bulletin 2009/49**

(51) Int Cl.:
**C08L 23/10** *(2006.01)*    **C08F 255/02** *(2006.01)*

(21) Application number: **05735090.2**

(86) International application number:
**PCT/US2005/011825**

(22) Date of filing: **05.04.2005**

(87) International publication number:
**WO 2005/111145 (24.11.2005 Gazette 2005/47)**

(54) **SCRATCH RESISTANT PROPYLENE POLYMER COMPOSITION**

KRATZFESTE PROPYLENPOLYMERZUSAMMENSETZUNG

COMPOSITION POLYMERE DE PROPYLENE RESISTANT AUX EGRATIGNURES

(84) Designated Contracting States:
**AT BE BG CH CY CZ DE DK EE ES FI FR GB GR HU IE IS IT LI LT LU MC NL PL PT RO SE SI SK TR**

(30) Priority: **05.05.2004 US 568288 P**

(43) Date of publication of application:
**24.01.2007 Bulletin 2007/04**

(73) Proprietor: **DOW GLOBAL TECHNOLOGIES INC.
Midland MI 48674 (US)**

(72) Inventors:
• **VAN RIEL, Norwin
NL-4527 EC Aardenburg (NL)**
• **VAN POUCKE, Jeroen
B-9160 Lokeren (BE)**

(74) Representative: **Raynor, John et al
Beck Greener
Fulwood House
12 Fulwood Place
London
WC1V 6HR (GB)**

(56) References cited:
**WO-A-01/42344    WO-A-02/22731
WO-A-02/24803    WO-A-03/087178**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 1 745 100 B1**

**Description**

This invention relates to propylene polymer compositions comprising a propylene polymer, a polyolefin elastomer and a low molecular weight polymer. This invention relates particularly to a propylene polymer composition comprising a propylene polymer, a substantially linear ethylene polymer or a linear ethylene polymer, and a low molecular weight polymer having improved processability with a good balance of stiffness and toughness which demonstrates improved scratch resistance in injection molded articles.

Propylene polymers have been used in many applications in the form of molded articles, film, sheet, because it is excellent in molding processability, toughness, moisture resistance, gasoline resistance, chemical resistance, has a low specific gravity, and is inexpensive. The use of propylene polymers is expanding at an increasing rate in the fields of exterior and interior automotive trims, in electrical and electrical equipment device housing and covers as well as other household and personal articles.

However, polypropylene is poor or inadequate in heat resistance, stiffness, scratch resistance and impact resistance. These deficiencies are obstacles to opening up new applications for polypropylene, particularly applications which have traditionally been injection molded. In order to overcome these shortcomings, especially inadequate impact resistance, polypropylene has been blended with a rubbery elastic material such as ethylene-propylene copolymer rubber, ethylene-propylene-diene copolymer rubber or ethylene-butene copolymer rubber. For examples, see USP 5,391,618 which discloses low crystalline polypropylene polymer compositions comprising an ethylene alpha-olefin copolymer, USP 5,576,374 which discloses polypropylene polymer compositions comprising a substantially linear ethylene polymer and USP 5,639,829 which discloses propylene polymer compositions comprising an ethylene and 1-butene random copolymer. However, while impact properties are improved these propylene polymer compositions do not achieve a good balance of stiffness and toughness. USP 6,300,419 discloses blends of high crystalline propylene polymers with high levels of a substantially linear ethylene polymer or a linear ethylene polymer to achieve good scratch resistance.

In view of the conventional propylene polymers and blends thereof, it would be highly desirable to provide a cost effective propylene polymer composition which exhibits improved processability with a good balance of stiffness and toughness which demonstrates improved scratch resistance in injection molded articles.

The present invention provides a method for producing a molded or extruded article which method comprises molding or extruding a propylene polymer composition, by a process selected from compression molding, injection molding, gas assisted injection molding, calendering, extrusion and/or blow molding to form the molded or an extruded article, wherein the propylene polymer composition comprises:

(a) from 40 to 95 parts by weight of a propylene polymer;
(b) from 1 to 20 parts by weight of a substantially linear ethylene polymer, a linear ethylene polymer or combinations thereof, wherein the substantially linear ethylene polymer and linear ethylene polymer are characterized as having:

(i) a density of less than about 0.93 g/cm$^3$,
(ii) a molecular weight distribution, $M_w/M_n$, of less than about 3.0,
(iii) a Composition Distribution Branch Index (as determined by temperature rising elution fractionation) of greater than 30 percent; and
(iv) a weight average molecular weight of from 40,000 to 180,000

(c) from 0.5 to 10 parts by weight of a polymer having a weight average molecular weight of from 500 to 70,000, and
(d) from 0 to 25 parts by weight of a filler,

wherein the ratio of the average molecular weight of (b) to the average molecular weight of (c) is equal to or greater than 1.5, and wherein parts by weight are based on the total weight of the propylene polymer composition.

The present invention is such a desirable propylene polymer composition. The composition possesses a desirable balance of good processability with a good balance of stiffness and impact strength and improved scratch resistance in injection molded articles.

In another embodiment of the present invention, the propylene polymer is preferably a homopolymer of propylene or a copolymer of propylene with a $C_2$ or $C_4$ to $C_{20}$ alpha-olefin.

In another embodiment of the present invention, the substantially linear ethylene polymer or linear ethylene polymer is preferably a copolymer of ethylene with propylene, 1-butene, 1-hexene, 4-methyl-1-pentene or 1-octene.

In another embodiment of the present invention, the low molecular weight polymer preferably has a molecular weight from 500 to 70,000 and is preferably a animal wax, a plant wax, carnauba wax, candelilla wax, Japan wax, beeswax, mineral wax, petroleum wax, paraffin wax, microcrystalline wax, petrolactam wax, polyolefin wax, oxidized polyolefin wax, higher fatty acid wax, higher fatty acid ester wax, a styrene oligomer, an amorphous poly-alpha-olefin, or mixtures thereof. Preferably, the low molecular weight polymer is polyethylene wax, a polypropylene wax, a polyethylene-propylene wax, a polyethylene-butylene wax, a polyethylene-hexylene wax, a polyethylene-octylene wax, or mixtures thereof. Alternatively, the low molecular weight polymer further comprises a polar co-monomer such as an unsaturated carboxylic acid, a carboxylic ester, a carboxylic acid salt, or mixture thereof, in an amount equal to or greater than 0.01 weight percent to an amount equal to or less than 5 weight percent based on the weight of the low molecular weight polymer.

In another embodiment of the present invention, the filler is preferably talc, wollastonite, clay, single layers of a cation exchanging layered silicate material or mixtures thereof.

In a further embodiment of the present invention, the propylene polymer composition further comprises (e) an additional polymer selected from low density polyethylene, linear low density polyethylene, high density polyethylene, polystyrene, polycyclohexylethane, polyester, ethylene/styrene interpolymer, syndiotactic polypropylene, syndiotactic polystyrene, ethylene/propylene copolymer, ethylene/propylene/diene terpolymer, or mixtures thereof.

In a further embodiment of the present invention, the propylene polymer composition further comprises a slip agent such as erucamide, oleamide, linoleamide, or steramide, an UV stabilizer, pigment(s), or combinations thereof.

Component (a) in the propylene polymer composition of the present invention is a propylene polymer, preferably a high crystalline propylene polymer. The propylene polymer suitable for use in this invention is well known in the literature and can be prepared by known techniques. In general, the propylene polymer is in the isotactic form, although other forms can also be used (for example, syndiotactic or atactic). The propylene polymer used for the present invention is preferably a homopolymer of polypropylene or more preferably a copolymer, for example, a random or block copolymer, of propylene and an alpha-olefin, preferably a $C_2$ or $C_4$ to $C_{20}$ alpha-olefin. The alpha-olefin is present in the propylene copolymer of the present invention in an amount of not more than 20 percent by mole, preferably not more than 15 percent, even more preferably not more than 10 percent and most preferably not more than 5 percent by mole.

Examples of the $C_2$ and $C_4$ to $C_{20}$ alpha-olefins for constituting the propylene and alpha-olefin copolymer include ethylene, 1-butene, 1-pentene, 1-hexene, 1-heptene, 1-octene, 1-decene, 1-dodecene, 1-hexadodecene, 4-methyl-1-pentene, 2-methyl-1-butene, 3-methyl-1-butene, 3,3-dimethyl-1-butene, diethyl-1-butene, trimethyl-1-butene, 3-methyl-1-pentene, ethyl-1-pentene, propyl-1-pentene, dimethyl-1-pentene, methylethyl-1-pentene, diethyl-1-hexene, trimethyl-1-pentene, 3-methyl-1-hexene, dimethyl-1-hexene, 3,5,5-trimethyl-1-hexene, methylethyl-1-heptene, trimethyl-1-heptene, dimethyloctene, ethyl-1-octene, methyl-1-nonene, vinylcyclopentene, vinylcyclohexene and vinylnorbornene, where alkyl branching position is not specified it is generally on position 3 or higher of the alkene.

The propylene polymer of the present invention can be prepared by various processes, for example, in a single stage or multiple stages, by such polymerization method as slurry polymerization, gas phase polymerization, bulk polymerization, solution polymerization or a combination thereof using a metallocene catalyst or a so-called Ziegler-Natta catalyst, which usually is one comprising a solid transition metal component comprising titanium. Particularly a catalyst consisting of, as a transition metal/solid component, a solid composition of titanium trichoride which contains as essential components titanium, magnesium and a halogen; as an organometalic component an organoaluminum compound; and if desired an electron donor. Preferred electron donors are organic compounds containing a nitrogen atom, a phosphorous atom, a sulfur atom, a silicon atom or a boron atom, and preferred are silicon compounds, ester compounds or ether compounds containing these atoms.

High crystallinity polypropylene is commonly made by catalytically reacting propylene in a polymerization reactor with appropriate molecular weight control agents. Nucleating agent is added after the reaction is completed in order to promote crystal formation. The polymerization catalyst should have high activity and be capable of generating highly tactic polymer. The reactor system must be capable of removing the heat of polymerization from the reaction mass, so the temperature and pressure of the reaction can be controlled appropriately.

A good discussion of various polypropylene polymers is contained in Modern Plastics Encyclopedia/89, mid October 1988 Issue, Volume 65, Number 11, pp. 86-92. The molecular weight of the propylene polymer for use in the present invention is conveniently indicated using a melt flow measurement, sometimes referred to as melt flow rate (MFR) or melt index (MI), according to ASTM D 1238 at 230°C and an applied load of 2.16 kilogram (kg). Melt flow rate is inversely proportional to the molecular weight of the polymer. Thus, the higher the molecular weight, the lower the melt flow rate, although the relationship is not linear. The melt flow rate for the propylene polymer useful herein is generally greater than 0.1 grams/10 minutes (g/10 min.), preferably greater than 0.5 g/10 min., more preferably greater than 1 g/10 min., and even more preferably greater than 10 g/10 min. The melt flow rate for the propylene polymer useful herein is generally less than 200 g/10 min., preferably less than 100 g/10 min., more preferably less than 75 g/10 min., and more preferably less than 50 g/10 min.

The propylene polymer as component (a) may be characterized also by its crystalline structure.

One method to characterize crystallinity is by the pulse nuclear magnetic resonance (NMR) method of K. Fujimoto, T. Nishi and R. Kado, Polymer Journal Volume 3, 448-462 (1972) wherein crystalline phase (I), intermediate phase (II) and amorphous (III) phase are determined. Preferably the weight ratio of the crystalline phase (I)/the intermediate phase (II) is greater than 4, preferably greater than 5, more preferably greater than 8 and most preferably greater than 10. The content of the amorphous phase (III) is from at least 1, preferably from at least 2, more preferably from at least 5, even more preferably from at least 10 and most preferably from at least 15 weight percent. The content of the amorphous phase (III) is less than 40, preferably less than 30, more preferably less than 25, even more preferably less than 20 and most preferably less than 15 percent by weight.

Generally, in pulse NMR determinations, an energy pulse is applied to a spinning polymer sample at high resolution over a specified range of temperature at specific temperature intervals (temperature in degrees Kelvin, °K). The resulting energy is monitored in the time domain (microsecond time scale). The energy/time curve is a measure of the time needed for the polymer to return from the excited energy state back to its ground energy level. This is called the Free Induction Decay (FID) curve. The curve is then mathematically broken down into a fast Gaussian equation (usually associated with crystallinity), a slow Gaussian equation and one exponential equation. The last two equations are usually associated with the polymers amorphous phase and an intermediate phase that is between the crystallinity and amorphous properties, respectively. These equations are used to calculate coefficients that characterize the appropriate amplitude and time components of the FID curve. The coefficients are then placed in a matrix and undergo regression processes such as partial least squares. The crystalline, amorphous, and intermediate phases are calculated and reported as weight percents as a function of temperature, °K.

However, a more preferable method of determining crystallinity in the propylene polymer is by differential scanning calorimetry (DSC). A small sample (milligram size) of the propylene polymer is sealed into an aluminum DSC pan. The sample is placed into a DSC cell with a 25 centimeter per minute nitrogen purge and cooled to about -100°C. A standard thermal history is established for the sample by heating at 10°C per minute to 225°C. The sample is then cooled to about -100°C and reheated at 10°C per minute to 225°C. The observed heat of fusion ($\Delta H_{observed}$) for the second scan is recorded. The observed heat of fusion is related to the degree of crystallinity in weight percent based on the weight of the polypropylene sample by the following equation:

$$\text{Crystallinity, \%} = \frac{\Delta H_{observed}}{\Delta H_{Isotactic\ PP}} \times 100$$

where the heat of fusion for isotactic polypropylene ($\Delta H_{isotactic\ PP}$), as reported in B. Wunderlich, Macromolecular Physics, Volume 3, Crystal Melting, Academic Press, New Your, 1980, p 48, is 165 Joules per gram (J/g) of polymer.

The degree of crystallinity for a high crystalline propylene polymer as determined by DSC is at least 54 weight percent, preferably at least 58 weight percent, more preferably at least 64 weight percent, even more preferably at least 68 weight percent and most preferably at least 70 weight percent based on the weight of the high crystalline propylene polymer. The degree of crystallinity for a high crystalline propylene polymer as determined by DSC is less than or equal to 100 weight percent, preferably less than or equal to 90 weight percent, more preferably less than or equal to 80 weight percent, and most preferably less than or equal to 75 weight percent based on the weight of the high crystalline propylene polymer.

Part or all of the propylene polymer of the present invention may be graft modified. A preferred graft modification of the polypropylene is achieved with any unsaturated organic compound containing, in addition to at least one ethylenic unsaturation (for example, at least one double bond), at least one carbonyl group (-C=O) and that will graft to a polypropylene as described above. Representative of unsaturated organic compounds that contain at least one carbonyl group are the carboxylic acids, anhydrides, esters and their salts, both metallic and nonmetallic. Preferably, the organic compound contains ethylenic unsaturation conjugated with a carbonyl group. Representative compounds include maleic, fumaric, acrylic, methacrylic, itaconic, crotonic, -methyl crotonic, and cinnamic acid and their anhydride, ester and salt derivatives, if any. Maleic anhydride is the preferred unsaturated organic compound containing at least one ethylenic unsaturation and at least one carbonyl group.

The unsaturated organic compound containing at least one carbonyl group can be grafted to the polypropylene by any known technique, such as those taught in USP 3,236,917 and USP 5,194,509. For example, polymer is introduced into a two-roll mixer and mixed at a temperature of 60°C. The unsaturated organic compound is then added along with a free radical initiator, such as, for example, benzoyl peroxide, and the components are mixed at 30°C until the grafting is completed. Alternatively, the reaction temperature is higher, for example, 210°C to 300°C, and a free radical initiator is not used or is used at a reduced concentration. An alternative and preferred method of grafting is taught in USP 4,905,541 by using a twin-screw devolatilizing extruder as the mixing apparatus. The polypropylene and unsaturated organic compound are mixed and reacted within the extruder at temperatures at which the reactors are molten and in the presence of a free radical initiator. Preferably, the unsaturated organic compound is injected into a zone maintained under pressure in the extruder.

The unsaturated organic compound content of the grafted polypropylene is at least 0.01 weight percent, preferably at least 0.1 weight percent, more preferably at least 0.5 weight percent, and most preferably at least 1 weight percent based on the combined weight of the polypropylene and organic compound. The maximum amount of unsaturated organic compound content can vary to convenience, but typically it does not exceed 10 weight percent, preferably it does not exceed 5 weight percent, more preferably it does not exceed 2 weight percent and most preferably it does not exceed 1 weight percent based on the combined weight of the polypropylene and the organic compound.

The propylene polymer or graft-modified propylene polymer is employed in the propylene polymer blend compositions of the present invention in amounts sufficient to provide the desired processability and good balance of stiffness and toughness. If present, the graft-modified propylene polymer can be employed in an amount equal to 100 weight percent of the total weight of the propylene polymer, preferably in an amount up to or equal to 50 weight percent, more preferably up to or equal to 30 weight percent, even more preferably up to or equal to 20 weight percent and most preferably up to or equal to 10 weight percent of the weight of the propylene polymer. In general, the propylene polymer, graft-modified propylene polymer or mixture thereof is employed in an amount of at least 40 parts by weight, preferably at least 45 parts by weight, more preferably at least 50 parts by weight, even more preferably at least 55 parts by weight, and most preferably at least 60 parts by weight based on the weight of the total composition. In general, the propylene polymer, graft-modified propylene polymer or mixture thereof is used in amounts less than or equal to 95 parts by weight, preferably less than or equal to 90 parts by weight, more preferably less than or equal to 85 parts by weight, even more preferably less than or equal to 80 parts by weight, and most preferably less than or equal to 75 parts by weight based on the weight of the total composition.

Component (b) in the compositions of this invention is a polyolefin elastomer. Suitable polyolefin elastomers comprises one or more $C_2$ to $C_{20}$ alpha-olefins in polymerized form, having a glass transition temperature ($T_g$) less than 25°C, preferably less than 0°C, most preferably less than -25°C. $T_g$ is the temperature or temperature range at which a polymeric material shows an abrupt change in its physical properties, including, for example, mechanical strength. Tg can be determined by differential scanning calorimetry. Examples of the types of polymers from which the present polyolefin elastomers are selected include copolymers of alpha-olefins, such as ethylene and propylene, ethylene and 1-butene, ethylene and 1-hexene or ethylene and 1-octene copolymers, and terpolymers of ethylene, propylene and a diene comonomer such as hexadiene or ethylidene norbornene.

Preferably, the polyolefin elastomer is one or more substantially linear ethylene polymer or one or more linear ethylene polymer (S/LEP), or a mixture of one or more of each. Both substantially linear ethylene polymers and linear ethylene polymers are known. Substantially linear ethylene polymers and their method of preparation are fully described in USP 5,272,236 and USP 5,278,272. Linear ethylene polymers and their method of preparation are fully disclosed in USP 3,645,992; USP 4,937,299; USP 4,701,432; USP 4,937,301; USP 4,935,397; USP 5,055,438; EP 129,368; EP 260,999; and WO 90/07526.

As used here, "a linear ethylene polymer" means a homopolymer of ethylene or a copolymer of ethylene and one or more alpha-olefin comonomers having a linear backbone (that is, no cross linking), no long-chain branching, a narrow molecular weight distribution and, for alpha-olefin copolymers, a narrow composition distribution. Further, as used here, "a substantially linear ethylene polymer" means a homopolymer of ethylene or a copolymer of ethylene and of one or more alpha-olefin comonomers having a linear backbone, a specific and limited amount of long-chain branching, a narrow molecular weight distribution and, for alpha-olefin copolymers, a narrow composition distribution.

Short-chain branches in a linear copolymer arise from the pendent alkyl group resulting upon polymerization of intentionally added $C_3$ to $C_{20}$ alpha-olefin comonomers. Narrow composition distribution is also sometimes referred to as homogeneous short-chain branching. Narrow composition distribution and homogeneous short-chain branching refer to the fact that the alpha-olefin comonomer is randomly distributed within a given copolymer of ethylene and an alpha-olefin comonomer and virtually all of the copolymer molecules have the same ethylene to comonomer ratio. The narrowness of the composition distribution is indicated by the value of the Composition Distribution Branch Index (CDBI) or sometimes referred to as Short Chain Branch Distribution Index. CDBI is defined as the weight percent of the polymer molecules having a comonomer content within 50 percent of the median molar comonomer content. The CDBI is readily calculated, for example, by employing temperature rising elution fractionation, as described in Wild, Journal of Polymer Science, Polymer Physics Edition, Volume 20, page 441 (1982), or USP 4,798,081. The CDBI for the substantially linear ethylene copolymers and the linear ethylene copolymers in the present invention is greater than 30 percent, preferably greater than 50 percent, and more preferably greater than 90 percent.

Long-chain branches in substantially linear ethylene polymers are polymer branches other than short chain branches. Typically, long chain branches are formed by insitu generation of an oligomeric alpha-olefin via beta-hydride elimination in a growing polymer chain. The resulting species is a relatively high molecular weight vinyl terminated hydrocarbon which upon polymerization yields a large pendent alkyl group. Long-chain branching may be further defined as hydrocarbon branches to a polymer backbone having a chain length greater than n minus 2 ("n-2") carbons, where n is the number of,carbons of the largest alpha-olefin comonomer intentionally added to the reactor. Preferred long-chain branches in homopolymers of ethylene or copolymers of ethylene and one or more $C_3$ to $C_{20}$ alpha-olefin comonomers have at least from 20 carbons up to more preferably the number of carbons in the polymer backbone from which the branch is pendant. Long-chain branching may be distinguished using $^{13}$C nuclear magnetic resonance spectroscopy alone, or with gel permeation chromatography-laser light scattering (GPC-LALS) or a similar analytical technique. Substantially linear ethylene polymers contain at least 0.01 long-chain branches/1000 carbons and preferably 0.05 long-chain branches/1000 carbons. In general, substantially linear ethylene polymers contain less than or equal to 3 long-chain branches/1000 carbons and preferably less than or equal to 1 long-chain branch/1000 carbons.

Preferred substantially linear ethylene polymers are prepared by using metallocene based catalysts capable of readily polymerizing high molecular weight alpha-olefin copolymers under the process conditions. As used here, copolymer means a polymer of two or more intentionally added comonomers, for example, such as might be prepared by polymerizing ethylene with at least one other $C_3$ to $C_{20}$ comonomer. Preferred linear ethylene polymers may be prepared in a similar manner using, for instance, metallocene or vanadium based catalyst under conditions that do not permit polymerization of monomers other than those intentionally added to the reactor. Other basic characteristics of substantially linear ethylene polymers or linear ethylene polymers include a low residuals content (that is, a low concentration therein of the catalyst used to prepare the polymer, unreacted comonomers and low molecular weight oligomers made during the course of the polymerization), and a controlled molecular architecture which provides good processability even though the molecular weight distribution is narrow relative to conventional olefin polymers.

While the substantially linear ethylene polymers or the linear ethylene polymers used in the practice of this invention include substantially linear ethylene homopolymers or linear ethylene homopolymers, preferably the substantially linear ethylene polymers or the linear ethylene polymers comprise between 50 to 95 weight percent ethylene and 5 to 50, and preferably 10 to 25 weight percent of at least one alpha-olefin comonomer. The comonomer content in the substantially linear ethylene polymers or the linear ethylene polymers is generally calculated based on the amount added to the reactor and as can be measured using infrared spectroscopy according to ASTM D-2238, Method B. Typically, the substantially linear ethylene polymers or the linear ethylene polymers are copolymers of ethylene and one or more $C_3$ to $C_{20}$ alpha-olefins, preferably copolymers of ethylene and one or more $C_3$ to $C_{10}$, alpha-olefin comonomers and more preferably copolymers of ethylene and one or more comonomers selected from the group consisting of propylene, 1-butene, 1-hexene, 4-methyl-1-pentane, and 1-octene. Most preferably the copolymers are ethylene and 1-octene copolymers.

The density of these substantially linear ethylene polymers or linear ethylene polymers is equal to or greater than 0.850 grams per cubic centimeter (g/cm$^3$) and preferably equal to or greater than 0.860 g/cm$^3$. Generally, the density of these substantially linear ethylene polymers or linear ethylene polymers is less than or equal to 0.935 g/cm$^3$ and preferably less than or equal to 0.900 g/cm$^3$. The melt flow ratio for substantially linear ethylene polymers, measured as $I_{10}/I_2$, is greater than or equal to 5.63, is preferably from 6.5 to 15, and is more preferably from 7 to 10. $I_2$ is measured according to ASTM Designation D 1238 using conditions of 190°C and 2.16 kilogram (kg) mass. $I_{10}$ is measured according to ASTM Designation D 1238 using conditions of 190°C and 10.0 kg mass.

The molecular weight distribution ($M_w/M_n$) for substantially linear ethylene polymers is the weight average molecular weight ($M_w$) divided by number average molecular weight ($M_n$). $M_w$ and $M_n$ are measured by gel permeation chromatography (GPC). For substantially linear ethylene polymers, the $I_{10}/I_2$ ratio indicates the degree of long-chain branching, that is, the larger the $I_{10}/I_2$ ratio, the more long-chain branching exists in the polymer. In preferred substantially linear ethylene polymers $M_w/M_n$ is related to $I_{10}/I_2$ by the equation: $Mw/Mn \leq (I_{10}/I_2) - 4.63$. Generally, $M_w/M_n$ for substantially linear ethylene polymers is at least 1.5 and preferably at least 2.0 and is less than or equal to 3.5, more preferably less than or equal to 3.0. In a most preferred embodiment, substantially linear ethylene polymers are also characterized by a single differential scanning calorimetry (DSC) melting peak.

The preferred $I_2$ melt index for these substantially linear ethylene polymers or linear ethylene polymers is from 0.01 g/10 min. to 100 g/10 min., and more preferably 0.1 g/10 min. to 10 g/10 min.

The preferred $M_w$ for these substantially linear ethylene polymers or linear ethylene polymers is equal to or less than 180,000, preferably equal to or less than 160,000, more preferably equal to or less than 140,000 and most preferably equal to or less than 120,000. The preferred $M_w$ for these substantially linear ethylene polymers or linear ethylene polymers is equal to or greater than 40,000, preferably equal to or greater than 50,000, more preferably equal to or greater than 60,000, even more preferably equal to or greater than 70,000, and most preferably equal to or greater than 80,000.

The substantially linear ethylene polymer or linear ethylene polymer is employed in the blend of the present invention in amounts sufficient to provide the desired balance of processability and impact resistance. In general, the substantially linear ethylene polymer or linear ethylene polymer is employed in amounts of at least 1 part by weight, preferably at least 2 parts by weight, more preferably at least 3 parts by weight, even more preferably at least 4 parts by weight and most preferably at least 5 parts by weight based on the weight of the total composition. In general, the substantially linear ethylene polymer or linear ethylene polymer is used in amounts less than or equal to 20 parts by weight, preferably less than or equal to 17 parts by weight, more preferably less than or equal to 15 parts by weight, even more preferably less than or equal to 12 parts by weight and most preferably less than or equal to 10 parts by weight based on the weight of the total composition.

Component (c) of the present invention is a low molecular weight polymer (LMP). The low molecular weight polymer is not particularly limited, and any of known low molecular weight polymer can selectively be used. Preferable examples of low molecular weight polymers include animal and plant waxes, carnauba wax, candelilla wax, Japan wax, beeswax, mineral wax, petroleum wax, paraffin wax, microcrystalline wax, petrolactam wax, polyolefin wax, oxidized polyolefin wax, higher fatty acid wax, and higher fatty acid ester wax. Further, as a resin having the same properties as wax, a styrene oligomer, and an amorphous poly-alpha-olefin are preferably used. These low molecular weight polymers may be used either singly or in combination.

Preferred low molecular weight polyolefins, sometimes referred to as polyolefin waxes, comprise polyethylene wax or polypropylene wax or copolymers thereof such as polyethylene-propylene wax, polyethylene-butylene wax, polyethylene-hexylene wax, and polyethylene-octylene wax. A particularly suitable polyolefinic wax is polyethylene wax. As used herein, the term polyolefin wax means a low molecular weight polyolefin having a molecular weight of from 500 to 70,000. These polyolefin waxes are well known to those skilled in the art and are available commercially. The polyolefin waxes are preferably based on olefins having from 2 to 18 carbon atoms, more preferably from 2 to 8 carbon atoms, and most preferably from 2 to 4 carbon atoms. The polyolefin wax may also have a small amount of a polar co-monomer such as an unsaturated carboxylic acid, carboxylic ester or carboxylic acid salt. Such functionality will generally be in an amount equal to or greater than 0.01 weight percent and equal to or less than 5 weight percent based on the weight of the low molecular weight polymer.

The low molecular weight polymer of the present invention has a weight average molecular weight equal to or greater than 500, preferably equal to or greater than 1,000, more preferably equal to or greater than 2,000, even more preferably equal to or greater than 5,000, and most preferably equal to or greater than 10,000. The low molecular weight polymer of the present invention has a weight average molecular weight equal to or less than 70,000, preferably equal to or less than 60,000, more preferably equal to or less than 40,000, even more preferably equal to or less than 30,000, and most preferably equal to or less than 20,000.

The low molecular weight polymer is present in an amount of equal to or greater than 0.5 parts by weight, preferably equal to or greater than 1 part by weight, more preferably equal to or greater than 1.5 parts by weight, and most preferably equal to or greater than 2 parts by weight based on the weight of the total composition. The low molecular weight polymer is present in an amount of equal to or less than 10 parts by weight, preferably equal to or less than 9 parts by weight, more preferably equal to or less than 8 parts by weight, and most preferably equal to or less than 7 parts by weight based on the weight of the total composition.

Preferably, the low molecular weight polymer is compatible with component (b) the polyolefin elastomer. In other words, when the two are melt blended preferably they form a single phase. Moreover, for the present invention, it is desired that the molecular weight ratio between component (b) and component (c) is equal to or greater than 1.5, preferably equal to or greater than 5, more preferably equal to or greater than 10, even more preferably equal to or greater than 20, and most preferably equal to or greater than 40.

Optionally, the propylene polymer composition comprises component (d) a filler such as calcium carbonate, talc, clay, mica, wollastonite, hollow glass beads, titaninum oxide, silica, carbon black, glass fiber or potassium titanate. Preferred fillers are talc, wollastonite, clay, single layers of a cation exchanging layered silicate material or mixtures thereof. Talcs, wollastonites, and clays are generally known fillers for various polymeric resins. See for example USP 5,091,461 and 3,424,703; EP 639,613 A1; and EP 391,413, where these materials and their suitability as filler for polymeric resins are generally described.

Preferred talcs and clays are uncalcined having very low free metal oxide content. The mineral talcs best suited are hydrated magnesium silicates as generally represented by the theoretical formula

$$3MgO \cdot 4SiO_2 \cdot H_2O$$

Compositions of talcs may vary somewhat with locality in which they are mined. Montana talcs, for example, closely approach this theoretical composition. Suitable mineral talcs of this type are commercially available as VANTALC F2003 available from Orlinger and JETFIL™ 700C available from Minerals Technology.

Examples of preferred cation exchanging layered silicate materials include biophilite, kaolinite, dickalite or talc clays; smectite clays; vermiculite clays; mica; brittle mica; Magadiite; Kenyaite; Octosilicate; Kanemite; and Makatite. Preferred cation exchanging layered silicate materials are smectite clays, including montmorillonite, bidelite, saponite and hectorite.

Preferred fillers have an average length to thickness ratio (L/T) preferably from 1 to 10,000 and provide the desired levels of physical and other property requirements such as toughness and stiffness (modulus). Several varieties of cation exchanging layered silicate materials, talc, wollastonite, clay and mixtures thereof have been found to be especially suitable.

The suitability of cation exchanging layered silicate material fillers in maintaining the preferred levels of toughness and stiffness of molded articles prepared from the resin has been found to be a function of the average L/T of the filler particles together with obtaining a uniformly small particle-sized filler. Highly preferred are those compositions incorporating fillers having an average L/T as measured according to the below-described technique of at least 1, preferably at least 15, more preferably at least 50, even more preferably at least 100, and most preferably at least 200. With regard to the maximum level for the L/T ratio, it has been found desirable to have a value up to and including 10,000, preferably up to and including 5,000, more preferably up to and including 1,000, even more preferably up to and including 500, and most preferably up to and including 200.

The suitability of non-cation exchanging layered silicate material fillers, such as calcium carbonate, talc, clay, mica, wollastonite, hollow glass beads, titanium oxide, silica, carbon black, glass fiber, potassium, titanate, in maintaining the preferred levels of toughness and stiffness of molded articles prepared from the resin has been found to be a function of the average L/T of the filler particles together with obtaining a uniformly small particle-sized filler. Highly preferred are those compositions incorporating fillers having an average L/T as measured according to the below-described technique of at least 1, preferably at least 1.5, more preferably at least 2, even more preferably at least 3, and most preferably at least 4. With regard to the maximum level for the L/T ratio, it has been found desirable to have a value up to and including 30, preferably up to and including 20, more preferably up to and including 15, even more preferably up to and including 10, and most preferably up to and including 4.

For determining the particle size and L/T ratio, the length of the fillers (or longest dimension, such as the diameter of a plate-shaped particle) as well as their thickness (shortest dimension of the 2 dimensions measurable) can be measured by preparing a filler modified polymeric resin sample and measuring the particle dimensions of the dispersed particles from digitized images produced by back scattered electron imaging using a scanning electron microscope and analyzing the digitized images in an image analyzer. Preferably, the size of the image is at least 10X the size of the maximum particle size.

The propylene polymer compositions included within the scope of this invention generally utilize such inorganic fillers with a number average particle size as measured by back scattered electron imaging using a scanning electron microscope of less than or equal to 10 micrometers ($\mu$m) preferably less than or equal to 3 $\mu$m, more preferably less than or equal to 2 $\mu$m, more preferably less than or equal to 1.5 $\mu$m and most preferably less than or equal to 1.0 $\mu$m. In general, smaller average particle sizes equal to or greater than 0.001 $\mu$m, preferably equal to or greater than 0.01 $\mu$m, more preferably equal to or greater than 0.1 $\mu$m, or most preferably equal to or greater than 0.5 $\mu$m, if available, could very suitably be employed.

Fillers may be employed to obtain optimized combinations of toughness and stiffness in the propylene polymer compositions according to the present invention. If present, the filler is employed in an amount of at least 1 part by weight, preferably at least 3 parts by weight, more preferably at least 5 parts by weight, even more preferably at least 10 parts by weight, and most preferably at least 15 parts by weight based on the total weight of the composition. Usually it has been found sufficient to employ an amount of filler up to and including 50 parts by weight, preferably up to and including 40 parts by weight, more preferably up to and including 30 parts by weight, more preferably up to and including 25 parts by weight, more preferably up to and including 20 parts by weight, and most preferably up to and including 15 parts by weight based the total weight of the composition.

Optionally, the propylene polymer composition further comprises an additional polymer which is a resin other than components (a), (b), and (c) above. Preferred additional polymers are polyethylene, preferably low density polyethylene (LDPE), linear low density polyethylene (LLDPE), high density polyethylene (HDPE), polystyrene, polycyclohexylethane, polyesters, such as polyethylene terephthalate, ethylene/styrene interpolymers, syndiotactic PP, syndiotactic PS, ethylene/propylene copolymers, EPDM, and mixtures thereof. If present, the additional polymer is employed in amounts of at least 1 part by weight, preferably at least 3 parts by weight, more preferably at least 5 parts by weight, and most preferably at least 7 parts by weight based on the weight of the total composition. In general, the additional polymer is used in amounts less than or equal to 40 parts by weight, preferably less than or equal to 30 parts by weight, more preferably less than or equal to 20 parts by weight, and most preferably 15 parts by weight based on the weight of the total composition

The compositions of the present invention can comprise a slip agent. Preferred slip agents are a saturated fatty acid amide or ethylenebis(amide), an unsaturated fatty acid amide or ethylenebis(amide) or combinations thereof. The saturated fatty amides useful in the present invention conform essentially to the empirical formula

$$RC(O)NHR^1$$

where R is a saturated alkyl group having of from 10 carbon atoms to 26 carbon atoms and $R^1$ is independently hydrogen or a saturated alkyl group having of from 10 carbon atoms to 26 carbon atoms. Compounds which conform to the above empirical structure are for example, palmitamide, stearamide, arachidamide, behenamide, stearyl stearamide, palmityl pamitamide, stearyl arachidamide and mixtures thereof.

The saturated ethylenebis(amides) useful in the present invention conform essentially to the empirical formula

$$RC(O)NHCH_2CH_2NHC(O)R$$

where R is as defined previously. Compounds which conform to the above empirical structure are for example, stearamidoethylstearamide, stearamidoethylpalmitamide, palmitamido-ethylstearamide and mixtures thereof.

The unsaturated fatty amides useful in the present invention conform essentially to the empirical formula

$$R^2C(O)NHR^3$$

where $R^2$ is an unsaturated alkyl group having of from 10 carbon atoms to 26 carbon atoms and $R^3$ is independently hydrogen or a unsaturated alkyl group having of from 10 carbon atoms to 26 carbon atoms. Compounds which conform to the above empirical structure are for example, oleamide, erucamide, linoleamide, and mixtures thereof.

The unsaturated ethylenebis(amides) useful in the present invention conform essentially to the empirical formula

$$R^4C(O)NHCH_2CH_2NHC(O)R^4$$

where $R^4$ is either a saturated or unsaturated alkyl group having of from 10 carbon atoms to 26 carbon atoms with the proviso that at least one of $R^4$ is unsaturated. Compounds which conform to the above empirical structure include, erucamidoethylerucamide, oleamidoethyloleamide, erucamidoethyloleamide, oleamidoethylerucamide, stearamidoethylerucamide, erucamidoethylpalmitamide, palmitamidoethyloleamide and mixtures thereof.

Generally preferred concentrations of the saturated fatty acid amide or ethylene-bis(amide) are in the range of from 0 parts to .5 parts by weight, preferably of from .0025 parts to .25 parts by weight and most preferably of from .015 parts to .15 parts by weight based on the weight of the total composition. Generally, preferred concentrations of the unsaturated fatty acid amide or ethylene-bis(amide) are in the range of from 0 parts to 1 parts by weight, preferably of from .05 parts to .75 parts by weight and most preferably of from .1 parts to .3 parts by weight based on the weight of the total composition.

Further, the claimed propylene polymer compositions may also optionally contain one or more additives that are commonly used in propylene polymer compositions of this type. Preferred additives of this type include, but are not limited to: ignition resistant additives, stabilizers, colorants, antioxidants, antistats, flow enhancers, mold releases, such as metal stearates (for example, calcium stearate, magnesium stearate), nucleating agents, including clarifying agents, Preferred examples of additives are ignition resistance additives, such as, but not limited to halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Further, compounds which stabilize polymer compositions against degradation caused by, but not limited to heat, light, and oxygen, or a mixture thereof may be used.

If used, such additives may be present in an amount from at least 0.01 parts, preferably at least 0.1 parts, more preferably at least 1 parts, more preferably at least 2 parts and most preferably at least 5 parts by weight based on the total weight of the composition. Generally, the additive is present in an amount less than or equal to 25 parts, preferably less than or equal to 20 parts, more preferably less than or equal to 15 parts, more preferably less than or equal to 12 parts, and most preferably less than or equal to 10 parts by weight based on the total weight of composition.

Preparation of the propylene polymer compositions of this invention can be accomplished by any suitable mixing means known in the art, including dry blending the individual components and subsequently melt mixing, either directly in the extruder used to make the finished article (for example, the automotive part), or pre-mixing in a separate extruder (for example, a Banbury mixer). Dry blends of the compositions can also be directly injection molded without pre-melt mixing. Alternatively, the propylene polymer and the polyolefin elastomer may be prepared in the same reactor.

The propylene polymer compositions of the present invention are thermoplastic. When softened or melted by the application of heat, the polymer blend compositions of this invention can be formed or molded using conventional techniques such as compression molding, injection molding, gas assisted injection molding, calendering, vacuum forming, thermoforming, extrusion and/or blow molding, alone or in combination. The polymer blend compositions can also be formed, spun, or drawn into films, fibers, multi-layer laminates or extruded sheets, or can be compounded with one or more organic or inorganic substances, on any machine suitable for such purpose. The propylene polymer compositions of the present invention are preferably injection molded. Some of the fabricated articles include exterior and interior automotive parts, for example, bumper beams, bumper fascia, pillars, and instrument panels; in electrical and electrical equipment device housing and covers; as well as other household and personal articles, including, for example, appliance housings, house wares, freezer containers, and crates; lawn and garden furniture; and building and construction sheet.

To illustrate the practice of this invention, examples of the preferred embodiments are set forth below. However, these examples do not in any manner restrict the scope of this invention. ,

EXAMPLES

Examples 1 to 8 were natural propylene polymer compositions compounded on a Werner and Pfleiderer ZSK-40, 40 millimeter (mm) twin screw extruder. Talc, when used, was fed through a side feeder; the balance of components were pre-blended prior to feeding into the extruder. Examples 1 to 8 did not contain any pigments or UV stabilizers. The following were the compounding conditions on the ZSK-40 extruder for Examples 1 to 8: Barrel temperature profile: 170°C, 180°C, 190°C, 195°C, 200°C, 205°C, and 205°C; Die temperature: 210°C; Melt temperature: 225°C; Feed rate: 75 Kg/hour; Screw speed: 500 revolutions per minute (rpm); Die pressure: 13 bar; and Torque: 28 percent. The die had nine holes. The extrudate was cooled in the form of strands and comminuted as pellets. The compositions of Examples 1 to 8 are listed in Table 1, parts are by weight based on the total weight of the composition.

Examples 9 and 10 were color and slip agent/UV stabilizer master batches, respectively. They were compounded on a Werner and Pfleiderer ZSK25, 25mm twin screw extruder. The components were pre-blended prior to feeding into the extruder. The following were the compounding conditions on the ZSK-25 extruder for Examples 9 and 10: (Barrel temperature profile: 86°C, 132°C, 169°C, 174°C, 175°C, 184°C, and 197°C; Die temperature: 205°C; Melt temperature: 200°C; Feed rate: 12 Kg/hour; Screw speed: 300 rpm; Die pressure: 3 bar; and Torque: 32 percent. The die had three holes. The extrudate was cooled in the form of strands and comminuted as pellets. The compositions for Examples 9 and 10 are listed in Table 2, parts are by weight based on the total weight of the mater batch.

Examples 11 to 18 were mixtures of natural propylene polymer composition pellets (Examples 1 to 8) with color master batch ("Color MB") pellets (Example 9) and slip agent UV stabilizer master batch (Slip agent/UV MB") pellets (Example 10). Example 11 was a mixture of pellets of Examples 1 pre-blended with pellets from Example 9 and Example 10, Example 12 was a mixture of pellets of Example 2 pre-blended with pellets from Example 9 and Example 10, Examples 13 to 18 were similar mixtures based on pellets from Examples 3 to 8 pre-blended with Examples 9 and Example 10. The pre-blended pellet mixtures Examples 11 to 18 were dried for 2 hours at 80°C prior to injection molding test specimens on a Krauss Mafei injection molding machine, having the following molding conditions: Barrel temperature profile: 200°C, 210°C, 220°C, 230°C, and 195°C; Injection speed: 40 percent; Injection pressure: 160 bar; Back pressure: 0; Cooling time: 42 seconds; and Mold temperature: 50°C. The test specimens were plaques having two molded-in textures or grains, each grain area measured 18 cm by 7.5 cm. The grains were Opel N111 and Opel N127.

The compositions for Examples 11 to 18 are given in Table 3 below in parts by weight based on the weight of the total composition. In Tables 1 to 3:

"PP-1" is a propylene copolymer comprising 8.5 weight percent ethylene having a density of 0.9 g/cm$^3$, a molecular weight of about 300,000, and a MFR of 7 g/10 min. at 230°C under a load of 2.16 kg available as C704-07 from The Dow Chemical Company (unless other wise noted, molecular weight refers to weight average molecular weight);

"PP-2" is a propylene copolymer comprising 10 weight percent ethylene having a density of 0.9 g/cm$^3$, a molecular weight of about 200,000, and a MFR of 44 g/10 min. at 230°C under a load of 2.16 kg available as C705-44 NA HP from The Dow Chemical Company;

"SLEP-1" is a substantially linear ethylene-octene copolymer having a density of 0.868 g/cm$^3$, a molecular weight of about 160,000, and a MFR of 0.5 g/10 min. at 190°C under a load of 2.16 kg available as AFFINITY™ EG 8150 Polyolefin Elastomer from the Dow Chemical Company;

"HDPE" is a high density polyethylene powder with a density of 0.96 g/cm$^3$ and a MFR of 1.1 AT 190°C under a load of 2.16 kg; and

"Talc" is a high-purity, asbestos-free hydrous magnesium silicate available as MISTRON™ G7C from Luzenac Benelux;

"Erucamide" is available as ARMOSLIP™ E from Akzo Nobel Polymer Chemicals;

"CHIMASORB™ 119" is a high molecular weight hindered amine light stabilizer available as CHIMASORB FL from Ciba Spezialiteitenchemie AG;

"IRGANOX™ B215" is a 2:1 blend of tris(2, 4-di-tert-butyl-phenyl)phosphate and tetrakis(methylene(3, 5-di-tert-butyl-4-hydroxyhydrocinnamate))methane and is available as IRGANOX B215 from Ciba Specialty Chemicals;

"LMP-1" is a low molecular weight high density oxidized polyethylene homopolymer available as A-C 395A from AC Wax having a molecular weight of about 40,000;

"LMP-2" is a low molecular weight ethylene acrylic acid zinc ionomer available as ACLYN™ 295A from AC Wax having a molecular weight of about 40,000;

"LMP-3" is a low molecular weight ethylene homopolymer having a molecular weight of 3,000 available as POLYWAX™ 3000 from Baker Petrolyte;

"LMP-4" is a low molecular weight substantially linear ethylene-octene copolymer having a density of 0.88 g/cm$^3$, a MI of 1000 g/10 min. at 190°C under a load of 2.16 kg, and a molecular weight of about 10,000;

"LMP-5" is a low molecular weight substantially linear ethylene-octene copolymer having a density of 0.87 g/cm$^3$, a MI of 1000 g/10 min. at 190°C under a load of 2.16 kg, and a molecular weight of about 10,000;

"LMP-6" is a low molecular weight substantially linear ethylene-octene copolymer having a density of 0.874 g/cm$^3$, a MI of 500 g/10 min. at 190°C under a load of 2.16 kg, and a molecular weight of about 20,000;

"LMP-7" is a low molecular weight HDPE having a narrow molecular weight distribution, a density of 0.955 g/cm$^3$, and a MFR of 25 g/10 min. at 190°C under a load of 2.16 kg available as HDPE 25055E Resin from The Dow Chemical Company having a molecular weight of about 50,000; and

"Pigments" are White 6-1 available as TIOXIDE™ RFC-5 from Tioxide, Brown 24 available as SICOTAN™ gelb K2111 F from BASF, Blue 29-1 available as Ultra Marine Blue CM05-D from Holiday, Red 101-1 MG available as BAYFERROX™ 130M-PL from Bayer, and Black 7-3 MG available as 33 percent black and 66 percent MGSTRAR™ from Ardo.

Table 1

| EXAMPLE | 1* | 2 | 3 | 4 | 5 | 6 | 7 | 8 |
|---|---|---|---|---|---|---|---|---|
| COMPONENT | | | | | | | | |
| PP-1 | 53.75 | 53.75 | 53.75 | 53.75 | 53.75 | 53.75 | 53.75 | 53.75 |
| PP-2 | 22 | 20 | 20 | 20 | 20 | 20 | 20 | 20 |
| SLEP-1 | 5 | 5 | 5 | 5 | 5 | 5 | 5 | 5 |
| Talc | 16 | 16 | 16 | 16 | 16 | 16 | 16 | 16 |
| IRGANOX B215 | 3 | 3 | 3 | 3 | 3 | 3 | 3 | 3 |
| Erucamide | 0.15 | 0.15 | 0.15 | 0.15 | 0.15 | 0.15 | 0.15 | 0.15 |
| LMP-1 | | 2 | | | | | | |
| LMP-2 | | | 2 | | | | | |
| LMP-3 | | | | | | | | 2 |
| LMP-4 | | | | 2 | | | | |
| LMP-5 | | | | | 2 | | | |
| LMP-6 | | | | | | 2 | | |
| LMP-7 | | | | | | | 2 | |
| *not an example of the present invention | | | | | | | | |

Table 2

| EXAMPLE | 9* | 10* |
|---|---|---|
| COMPONENT | | |
| PP-2 | 20 | 68.58 |
| HDPE | 32 | 15.71 |
| Erucamide | | 10 |
| CHIMASORB 199 | | 5.71 |
| PIGMENTS | | |
| White 6-1 | 32.34 | |
| Brown 24 | 9.51 | |
| Blue 29-1 | 2.81 | |
| Red 101-1 MG | 0.87 | |

(continued)

| EXAMPLE | 9* | 10* |
|---|---|---|
| Black 7-3 MG | 2.47 | |

*not an example of the present invention

Table 3

| EXAMPLE | 11* | 12 | 13 | 14 | 15 | 16 | 17 | 18 |
|---|---|---|---|---|---|---|---|---|
| COMPONENT | | | | | | | | |
| Example 1 | balance | | | | | | | |
| Example 2 | | balance | | | | | | |
| Example 3 | | | balance | | | | | |
| Example 4 | | | | balance | | | | |
| Example 5 | | | | | balance | | | |
| Example 6 | | | | | | balance | | |
| Example 7 | | | | | | | balance | |
| Example 8 | | | | | | | | balance |
| Example 9 | 3.125 | 3.125 | 3.125 | 3.125 | 3.125 | 3.125 | 3.125 | 3.125 |
| Example 10 | 3.5 | 3.5 | 3.5 | 3.5 | 3.5 | 3.5 | 3.5 | 3.5 |
| *not an example of the present invention | | | | | | | | |

The following scratch resistance test is performed on Examples 11 to 18 and the results are reported in Table 4:

"Scratch Resistance" is determined according to GME 60280 from General Motors (GM) where a test needle (scratch pen of diameter 1 mm) applies a grid of 20 scratches. The distance between the scratches is 2mm. The load is 15 Newton (N) instead of the prescribed load of 5N in the test method. The L value is measured before and after scratching on a Data Color spectrophotometer. Delta L (DL) is determined according to the formula:

$$DL = L_{\text{value after scratching}} - L_{\text{value before scratching}}$$

Test plaques are tested at the end near the gate and the end away from the gate, the average of the two values is reported in Table 4.

Table 4

| EXAMPLE | 11* | 12 | 13 | 14 | 15 | 16 | 17 | 18 |
|---|---|---|---|---|---|---|---|---|
| Average Scratch Resistance, DL | | | | | | | | |
| Opel N111 | 1.645 | 0.8675 | 1.0195 | 1.1005 | 1.03 | 0.801 | 0.832 | 0.722 |
| Opel N127 | 3.6285 | 1.7115 | 2.141 | 2.4895 | 2.1245 | 1.922 | 1.8625 | 1.6075 |
| *not an example of the present invention | | | | | | | | |

Examples 19 to 22 are prepared by the same method as Examples 1 to 8.
The compositions of Examples 19 to 22 are given in Table 5 below in parts by weight based on the weight of the total composition. In Tables 5:

"PP-3" is a propylene copolymer comprising 15 weight percent ethylene having a density of 0.9 g/cm$^3$, a molecular weight of about 170,000, and a MFR of 12 g/10 min. at 230°C under a load of 2.16 kg available as C715-12 N HP from The Dow Chemical Company;

"SLEP-2" is a saturated substantially linear ethylene-octene copolymer comprising about 20 weight percent 1-octene having a density of 0.868 g/cm$^3$, a molecular weight of about 90,000, and a MFR of 5.0 g/10 min. at 190°C under a load of 2.16 kg available as AFFINITY™ EG 8200 Polyolefin Elastomer from the Dow Chemical Company;

"HDPE" is a high density polyethylene powder with a density of 0.96 g/cm$^3$ and a MFR of 1.1 AT 190°C under a load of 2.16 kg; and

"LMP-8" is a VLDPE ethylene-butene copolymer produced via gas phase polymerization having a density of 0.8985 g/cm$^3$, a molecular weight of about 50,000, and a MFR of 5.2 at 190°C under a load of 2.16 kg.

Table 5

| EXAMPLE | 19* | 20* | 21 | 22 |
|---|---|---|---|---|
| COMPONENT | | | | |
| PP-2 | 22 | | | 61.8 |
| PP-3 | | 74.8 | 72.8 | |
| PP-1 | 52.8 | | | |
| SLEP-1 | 5 | | | |
| SLEP-2 | | 9 | 9 | 10 |
| Talc | 16 | 16 | 16 | 20 |
| IRGANOX | 0.2 | 0.2 | 0.2 | 0.2 |
| B215 | | | | |
| HDPE | 4 | | | |
| LMP-3 | | | 2 | 2 |
| LMP-8 | | | | 6 |
| *not an example of the present invention | | | | |

Examples 23 to 26 are pre-blended pellet mixtures prepared and injection molded into plaques by the same method as Examples 11 to 18.

The compositions of Examples 23 to 26 are given in Table 6 below in parts by weight based on the weight of the total composition.

Table 6

| EXAMPLE | 23* | 24* | 25 | 26 |
|---|---|---|---|---|
| COMPONENT | | | | - |
| Example 19 | balance | | | |
| Example 20 | | balance | | |
| Example 21 | | | balance | |
| Example 22 | | | | balance |
| Example 9 | 3.125 | 3.125 | 3.125 | 3.125 |
| Example 10 | 3.5 | 3.5 | 3.5 | 3.5 |
| *not an example of the present invention | | | | |

Scratch resistance properties for Examples 23 to 26 are reported in Table 7:

Table 7

| EXAMPLE | 23* | 24* | 25 | 26 |
|---|---|---|---|---|
| Average Scratch Resistance, DL | | | | |
| Opel N111 | 2.407 | 2.259 | 1.106 | 1.607 |
| Opel N127 | 4.139 | 3.47 | 2.887 | 2.778 |
| *not an example of the present invention | | | | |

Examples 27 to 31 are prepared by the same method as Examples 1 to 8.

The compositions of Examples 27 to 31 are given in Table 8 below in parts by weight based on the weight of the total composition. In Tables 8:

"LMP-9" is a low molecular weight ethylene homopolymer having a molecular weight of about 2,000 available as POLYWAX™ 2000 from Baker Petrolyte;

"LMP-10" is a low molecular weight branched polyalphaolefin having a molecular weight range between 1,500 to 5,000 and is available as VYSAR™ 260 from Baker Petrolyte;

"LMP-11" is a low molecular weight polyethylene wax having a melting range between 70°C to 110°C, a density of 750 to 900 kilogram per cubic meter (kg/m$^3$), and a molecular weight of about 800 available as Polyethylene Wax 800 from the Dow Chemical Company; and

"LMP-12" is a low molecular weight polyethylene wax with a drop point of 115°C, a density of 0.93 g/cm$^3$, and a molecular weight of about 40,000 available as AC 9A from AC Wax.

Table 8

| EXAMPLE | 27* | 28 | 29 | 30 | 31 |
|---|---|---|---|---|---|
| COMPONENT | | | | | |
| PP-1 | 53.75 | 53.75 | 53.75 | 53.75 | 53.75 |
| PP-2 | 22 | 20 | 20 | 20 | 20 |
| SLEP-1 | 5 | 5 | 5 | 5 | 5 |
| Talc | 16 | 16 | 16 | 16 | 16 |
| LLDPE | 3 | 3 | 3 | 3 | 3 |
| IRGANOX B215 | 0.1 | 0.1 | 0.1 | 0.1 | 0.1 |
| Erucamide | 0.15 | 0.15 | 0.15 | 0.15 | 0.15 |
| LMP-9 | | 2 | | | |
| LMP-10 | | | 2 | | |
| LMP-11 | | | | 2 | |
| LMP-12 | | | | | 2 |
| *not an example of the present invention | | | | | |

Examples 32 to 36 are pre-blended pellet mixtures prepared and injection molded into plaques by the same method as Examples 11 to 18.

The compositions of Examples 32 to 36 are given in Table 9 below in parts by weight based on the weight of the total composition.

Table 9

| EXAMPLE | 32* | 33 | 34 | 35 | 36 |
|---|---|---|---|---|---|
| COMPONENT | | | | | |
| Example 27 | balance | | | | |
| Example 28 | | balance | | | |
| Example 29 | | | balance | | |
| Example 30 | | | | balance | |
| Example 31 | | | | | balance |
| Example 9 | 3.125 | 3.125 | 3.125 | 3.125 | 3.125 |
| Example 31 | 3.5 | 3.5 | 3.5 | 3.5 | 3.5 |
| *not an example of the present invention | | | | | |

Scratch resistance properties for Examples 32 to 36 are reported in Table 10:

Table 10

| EXAMPLE | 32* | 33 | 34 | 35 | 36 |
|---|---|---|---|---|---|
| Average Scratch Resistance, DL | | | | | |
| Opel N111 | 1.209 | 0.233 | 0.426 | 0.432 | 1.156 |
| Opel N127 | 3.736 | 0.712 | 2.136 | 1.095 | 2.905 |
| *not an example of the present invention | | | | | |

## Claims

1. A method for producing a molded or extruded article which method comprises molding or extruding a propylene polymer composition, by a process selected from compression molding, injection molding, gas assisted injection molding, calendering, extrusion and/or blow molding to form the molded or an extruded article, wherein the propylene polymer composition comprises:

（a) from 40 to 95 parts by weight of a propylene polymer;
(b) from 1 to 20 parts by weight of a substantially linear ethylene polymer, a linear ethylene polymer or combinations thereof, wherein the substantially linear ethylene polymer and linear ethylene polymer are **characterized** as having:

(i) a density of less than about 0.93 g/cm$^3$,
(ii) a molecular weight distribution, $M_w/M_n$, of less than about 3.0,
(iii) a Composition Distribution Branch Index (as determined by temperature rising elution fractionation) of greater than 30 percent; and
(iv) a weight average molecular weight of from 40,000 to 180,000

(c) from 0.5 to 10 parts by weight of a low molecular weight polymer having a weight average molecular weight of from 500 to 70,000, and
(d) from 0 to 25 parts by weight of a filler,

wherein the ratio of the average molecular weight of (b) to the average molecular weight of (c) is equal to or greater than 1.5, and wherein parts by weight are based on the total weight of the propylene polymer composition.

**2.** The method of Claim 1 wherein the propylene polymer is a homopolymer of propylene.

**3.** The method of Claim 1 wherein the propylene polymer is a copolymer of propylene and a $C_2$ or $C_4$ to $C_{20}$ alpha-olefin.

**4.** The method of Claim 1 wherein the substantially linear ethylene polymer or linear ethylene polymer is a copolymer of ethylene with a $C_3$ to $C_{20}$ alpha-olefin.

**5.** The method of Claim 1 wherein the substantially linear ethylene polymer or linear ethylene polymer is a copolymer of ethylene with propylene, 1-butene, 1-hexene, 4-methyl-1-pentane or 1-octene.

**6.** The method of Claim 1 wherein the low molecular weight polymer has a molecular weight from 500 to 70,000 and is an animal wax, a plant wax, carnauba wax, candelilla wax, Japan wax, beeswax, mineral wax, petroleum wax, paraffin wax, microcrystalline wax, petrolactam wax, polyolefin wax, oxidized polyolefin wax, higher fatty acid wax, higher fatty acid ester wax, a styrene oligomer, an amorphous poly-alpha-olefin, or mixtures thereof.

**7.** The method of Claim 1 wherein the low molecular weight polymer is polyethylene wax, a polypropylene wax, a polyethylene-propylene wax, a polyethylene-butylene wax, a polyethylene-hexylene wax, a polyethylene-octylene wax, or mixtures thereof.

**8.** The method of Claim 7 wherein the low molecular weight polymer further comprises a polar co-monomer in an amount equal to or greater than 0.01 weight percent to an amount equal to or less than 5 weight percent based on the weight of the low molecular weight polymer.

**9.** The method of Claim 8 wherein the polar co-monomer is an unsaturated carboxylic acid, a carboxylic ester, a carboxylic acid salt, or mixture thereof.

**10.** The method of Claim 1 wherein the filler is present in an amount from 1 to 20 parts by weight.

**11.** The method of Claim 10 wherein the filler is talc, wollastonite, clay, single layers of a cation exchanging layered silicate material or mixtures thereof.

**12.** The method of Claim 10 wherein the filler is talc.

**13.** The method of Claim 1 wherein the propylene polymer further comprises (e) from 1 part to 20 parts of an additional polymer selected from low density polyethylene, linear low density polyethylene, high density polyethylene, polystyrene, polycyclohexylethane, polyester, ethylene/styrene interpolymer, syndiotactic polypropylene, syndiotactic polystyrene, ethylene/propylene copolymer, ethylene/propylene/diene terpolymer, or mixtures thereof.

**14.** The method of Claim 1, wherein the propylene polymer further comprises from 0.1 to 1 part of (f) a slip agent selected from erucamide, oleamide, linoleamide, or stearamide.

**15.** The method of Claim 1 wherein the propylene polymer further comprises an UV stabilizer, or combinations thereof.

**16.** The method of Claim 1, wherein the molded or extruded article is selected from an automotive bumper beam, an automotive bumper fascia, an automotive pillar, an automotive instrument panel, an electrical equipment device housing, an electrical equipment device cover, an appliance housing, a freezer container, a crate, or lawn and garden furniture.

**Patentansprüche**

**1.** Ein Verfahren zur Herstellung eines geformten oder extrudierten Gegenstandes, wobei das Verfahren das Formen oder Extrudieren einer Propylenpolymerzusammensetzung durch ein Verfahren, ausgewählt aus Formpressen, Spritzgießen, gasunterstütztem Spritzgießen, Kalandrieren, Extrudieren und/oder Blasformen, um den geformten oder extrudierten Gegenstand zu bilden, umfasst, wobei die Propylenpolymerzusammensetzung enthält:

(a) 40 bis 95 Gewichtstelle eines Propylenpolymers;
(b) 1 bis 20 Gewichtsteile eines im Wesentlichen linearen Ethylenpolymers, eines linearen Ethylenpolymers oder Kombinationen daraus, wobei das im Wesentlichen lineare Ethylenpolymer und das lineare Ethylenpolymer **dadurch gekennzeichnet sind, dass** sie aufweisen:

(i) eine Dichte von weniger als ungefähr 0,93 g/cm$^3$.
(ii) eine Molekulargewichtsverteilung $M_w/M_n$ von weniger als ungefähr 3,0,
(iii) einen Composition Distribution Branch Index (wie durch Elutionsfraktionierung bei steigender Temperatur bestimmt) von größer als 30% und
(iv) ein gewichtsmittleres Molekulargewicht von 40.000 bis 180.000

(c) 0,6 bis 10 Gewichtsteile eines niedermolekularen Polymers mit einem gewichtsmittleren Molekulargewicht von 500 bis 70.000 und
(d) 0 bis 25 Gewichtsteile eines Füllstoffes,

wobei das Verhältnis von mittlerem Molekulargewicht von (b) zu dem mittlerem Molekulargewicht von (c) gleich oder größer als 1,5 ist und wobei die Gewichtsteile auf das Gesamtgewicht der Propylenpolymerzusammensetzung bezogen sind.

2. Das Verfahren nach Anspruch 1, wobei das Propylenpolymer ein Homopolymer von Propylen ist.

3. Das Verfahren nach Anspruch 1, wobei das Propylenpolymer ein Copolymer von Propylen und einem $C_2$- oder $C_4$- bis $C_{20}$-α-Olefin ist.

4. Das Verfahren nach Anspruch 1, wobei das im Wesentlichen lineare Ethylenpolymer oder das lineare Ethylenpolymer ein Copolymer von Ethylen mit einem $C_3$- bis $C_{20}$-α-Olefin ist.

5. Das Verfahren nach Anspruch 1, wobei das im Wesentlichen lineare Ethylenpolymer oder das lineare Ethylenpolymer ein Copolymer von Ethylen mit Propylen, 1-Buten, 1-hexen, 4-Methyl-1-pentan oder 1-Octen ist.

6. Das Verfahren nach Anspruch 1, wobei das niedermolekulare Polymer Polymer ein Molekulargewicht von 500 bis 70.000 hat und ein tierisches Wachs, ein pflanzliches Wachs, Carnaubawachs, Candelillawachs, Japanwachs, Bienenwachs, Mineralwachs, Erdölwachs, Paraffinwachs, mlkrokristallines Wachs, Petrolactamwachs, Polyolefinwachs, oxidiertes Polyolefinwachs, ein Wachs einer höheren Fettsäure, ein Wachs eines höheren Fettsäureesters, ein Styrololigomer, ein amorphes Poly-α-olefin oder Mischungen daraus ist.

7. Das Verfahren nach Anspruch 1, wobei das niedermolekulare Polymer ein Polyethylenwachs, ein Polypropylenwachs, ein Polyethylenpropylen-Wachs, ein Polyethylenbutylen-Wachs, ein Polyethylenhexylen-Wachs, ein Polyethylenoctylen-Wachs oder Mischungen daraus ist.

8. Das Verfahren nach Anspruch 7, wobei das niedermolekulare Polymer außerdem ein polares Comonomer in einer Menge von gleich oder größer als 0,01 Gew.-% bis zu einer Menge von gleich oder weniger als 5 Gew.-%, bezogen auf das Gewicht des niedermolekularen Polymers, enthält.

9. Das Verfahren nach Anspruch 8, wobei das polare Comonomer eine ungesättigte Carbonsäure, ein Carbonsäureester, ein Carbonsäuresalz oder Mischungen daraus ist.

10. Das Verfahren nach Anspruch 1, wobei der Füllstoff in einer Menge von 1 bis 20 Gewichtsteilen vorliegt.

11. Das Verfahren nach Anspruch 10, wobei der Füllstoff Talk, Wollastonit, Ton, einzelne Schichten eines kationenaustauschenden Schichtsilicatmaterials oder Mischungen daraus ist.

12. Das Verfahren nach Anspruch 10, wobei der Füllstoff Talk ist.

13. Das Verfahren nach Anspruch 1, wobei das Propylenpolymer außerdem (e) 1 bis 20 Teile eines zusätzlichen Polymers, ausgewählt aus Polyethylen niedriger Dichte, linearem Polyethylen niedriger Dichte, Polyethylen hoher Dichte, Polystyrol, Polycyclohexylethan, Polyester, Ethylen/Styrol-Interpolymer, syndiotaktischem Polypropylen, syndiotaktischem Polystyrol, Ethylen/Propylen-Copolymer, Ethylen/Propylen/Dien-Terpolymer oder Mischungen daraus, enthält.

**14.** Das Verfahren nach Anspruch 1, wobei das Propylenpolymer außerdem 0,1 bis 1 Teil (f) eines Gleitmittels, ausgewählt aus Erucamid, Oleamid, Linoleamid oder Stearamid, enthält.

**15.** Das Verfahren nach Anspruch 1, wobei das Propylenpolymer außerdem einen UV-Stabilisator oder Kombinationen davon enthält.

**16.** Das Verfahren nach Anspruch 1, wobei der geformte oder extrudierte Gegenstand ausgewählt ist aus einem Stoßfängerträger für Autos, einer Stoßfängerverkleidung für Autos, einer Automobilsäule, einem Autoarmaturenbrett, einem Gehäuse eines Elektrogeräts, einer Abdeckung eines Elektrogeräts, einem Gerätegehäuse, einem Tiefkühlbehälter, einem Getränkekasten oder Grünflächen- und Gartenmöbeln.

**Revendications**

**1.** Procédé de production d'un article moulé ou extrudé, lequel procédé comprend le moulage ou l'extrusion d'une composition de polymère propylène, par un traitement choisi parmi moulage par compression, moulage par injection, moulage par injection assistée par gaz, calandrage, extrusion et/ou moulage-soufflage pour former l'article moulé ou extrudé, dans lequel la composition de polymère propylène comprend :

(a) de 40 à 95 parties en poids d'un polymère propylène ;
(b) de 1 à 20 parties en poids d'un polymère éthylène sensiblement linéaire, d'un polymère éthylène linéaire ou de leurs combinaisons, où le polymère éthylène sensiblement linéaire et le polymère éthylène linéaire sont **caractérisés** comme ayant :

(i) une masse volumique inférieure à environ 0,93 g/cm$^3$,
(ii) une distribution de masse moléculaire, $M_m/M_n$, inférieure à environ 3,0,
(iii) un indice de ramification de distribution de composition (tel que déterminé par fractionnement d'élution par élévation de température) supérieur à 30 pour cent ; et (iv) une masse moléculaire moyenne en masse de 40 000 à 180 000

(c) de 0,5 à 10 parties en poids d'un polymère de faible masse moléculaire ayant une masse moléculaire moyenne en masse de 500 à 70 000, et
(d) de 0 à 25 parties en poids d'une charge,

dans lequel le rapport entre la masse moléculaire moyenne de (b) et la masse moléculaire moyenne de (c) est supérieur ou égal à 1,5, et où les parties en poids sont basées sur le poids total de la composition de polymère propylène.

**2.** Procédé selon la revendication 1, dans lequel le polymère propylène est un homopolymère propylène.

**3.** Procédé selon la revendication 1, dans lequel le polymère propylène est un copolymère propylène et d'alpha-oléfine en $C_2$ ou $C_4$ à $C_{20}$.

**4.** Procédé selon la revendication 1, dans lequel le polymère éthylène sensiblement linéaire ou polymère éthylène linéaire est un copolymère éthylène avec une alpha-oléfine en $C_3$ à $C_{20}$.

**5.** Procédé selon la revendication 1, dans lequel le polymère éthylène sensiblement linéaire ou polymère éthylène linéaire est un copolymère éthylène avec le propylène, le 1-butène, le 1-hexène, le 4-méthyl-1-pentane ou le 1-octène.

**6.** Procédé selon la revendication 1, dans lequel le polymère de faible masse moléculaire a une masse moléculaire de 500 à 70 000 et est une cire animale, une cire végétale, la cire de carnauba, la cire de candelilla, la cire du Japon, la cire d'abeilles, une cire minérale, une cire de pétrole, une cire de paraffine, une cire microcristalline, une cire de pétrolactame, une cire de poly(oléfine), une cire de poly(oléfine) oxydée, une cire d'acide gras supérieur, une cire d'ester d'acide gras supérieur, un oligomère de styrène, une poly(alpha-oléfine) amorphe, ou leurs mélanges.

**7.** Procédé selon la revendication 1, dans lequel le polymère de faible masse moléculaire est une cire de poly(éthylène), une cire de poly(propylène), une cire de poly(éthylène)-propylène, une cire de poly(éthylène)-butylène, une cire de poly(éthylène)-hexylène, une cire de poly(éthylène)-octylène ou leurs mélanges.

**8.** Procédé selon la revendication 7, dans lequel le polymère de faible masse moléculaire comprend en outre un comonomère polaire en une quantité supérieure ou égale à 0,01 pour cent en poids à une quantité inférieure ou égale à 5 pour cent en poids par rapport au poids du polymère de faible masse moléculaire.

**9.** Procédé selon la revendication 8, dans lequel le comonomère polaire est un acide carboxylique insaturé, un ester carboxylique, un sel d'acide carboxylique ou leurs mélanges.

**10.** Procédé selon la revendication 1, dans lequel la charge est présente en une quantité de 1 à 20 parties en poids.

**11.** Procédé selon la revendication 10, dans lequel la charge est le talc, la wollastonite, une argile, des couches simples d'une matière de silicate en couche échangeuse de cations ou leurs mélanges.

**12.** Procédé selon la revendication 10, dans lequel la charge est le talc.

**13.** Procédé selon la revendication 1, dans lequel le polymère propylène comprend en outre (e) de 1 partie à 20 parties d'un polymère supplémentaire choisi parmi le poly(éthylène) basse densité, le poly(éthylène) basse densité linéaire, le poly(éthylène) haute densité, le poly(styrène), le poly(cyclohexyléthane), le poly(ester), un interpolymère d'éthylène/styrène, le poly(propylène) syndiotactique, le poly(styrène) syndiotactique, un copolymère éthylène/propylène, un terpolymère éthylène/propylène/diène, ou leurs mélanges.

**14.** Procédé selon la revendication 1, dans lequel le polymère propylène comprend en outre de 0,1 à 1 partie de (f) un agent de glissement choisi parmi l'érucamide, l'oléamide, le linoléamide ou le stéaramide.

**15.** Procédé selon la revendication 1, dans lequel le polymère propylène comprend en outre un agent anti-UV, ou ses combinaisons.

**16.** Procédé selon la revendication 1, dans lequel l'article moulé ou extrudé est choisi parmi une poutre de pare-chocs automobile, un plastique souple de carénage automobile, un pilier pour automobile, un panneau d'instrument automobile, un logement de dispositif d'équipement électrique, une couverture de dispositif d'équipement électrique, un logement d'instrument, un récipient de congélateur, une caisse à claire-voie ou un meuble pour pelouse et jardin.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US P5391618 A
- US P5576374 A
- US P5639829 A
- US P6300419 B
- US P3236917 A
- US P5194509 A
- US P4905541 A
- US P5272236 A
- US P5278272 A
- US P3645992 A
- US P4937299 A
- US P4701432 A
- US P4937301 A
- US P4935397 A
- US P5055438 A
- EP 129368 A
- EP 260999 A
- WO 9007526 A
- US P4798081 A
- US 5091461 A
- US 3424703 A
- EP 639613 A1
- EP 391413 A

### Non-patent literature cited in the description

- Modern Plastics Encyclopedia/89. October 1988, vol. 65, 86-92
- **K. Fujimoto ; T. Nishi ; R. Kado.** *Polymer Journal,* 1972, vol. 3, 448-462
- **B. Wunderlich.** Macromolecular Physics. Crystal Melting, Academic Press, 1980, vol. 3, 48
- **Wild.** Journal of Polymer Science. Polymer Physics Edition, 1982, vol. 20, 441